# EUROPEAN PATENT APPLICATION

(11) **EP 2 237 393 A1**
(43) Date of publication of application: **06.10.2010**
(21) Application number: 08871262.5
(22) Date of filing: 25.12.2008
(51) Int. Cl.: H02K 3/34

(54) **INSULATOR STRUCTURE FOR MOTOR, AND PUMP INTEGRAL WITH MOTOR**

(30) Priority: 25.01.2008 JP 2008015418
(71) Applicant: Panasonic Electric Works Co., Ltd, Kadoma-shi Osaka 571-8686 (JP)
(72) Inventor: TOKUNAGA, Ryohei, Osaka 571-8686 (JP)
(74) Representative: Appelt, Christian W.
(86) International application number: PCT/JP2008/073568
(87) International publication number: WO 2009/093403

(57) **Abstract**

An insulator structure of a motor, includes: a stator core having a plurality of protruding tooth portions which are disposed along an inner periphery of the stator core or an outer periphery of the stator core; a pair of first and second insulators respectively mounted to a first end portion and a second end portion in an axial direction of the stator core, wherein a plurality of cover portions are provided for each of the pair of the first and second insulators so as to cover the plurality of the respective tooth portions; and a winding wound around a tooth portion of the tooth portions covered with the respective cover portions, the winding being capable of causing a magnetic force to the tooth portion by an energizing; wherein with the pair of the first and second insulators, the cover portion's second head end portion in an axial direction of the first insulator in the axial direction and the cover portion's first head end portion in an axial direction of the second insulator in the axial direction mate with each other, the cover portion having the head end portion in the axial direction provided with a first fitting portion and the cover portion having the head end portion in the axial direction provided with a second fitting portion fittable with the first fitting portion are provided for each of the pair of the first and second insulators, the cover portion provided with the first fitting portion and the cover portion provided with the second fitting portion are so disposed as to face each other in such a configuration as to interpose therebetween a center axis of the stator core, and the first insulator and the second insulator which is substantially the same as the first insulator in configuration and is reversed in the axial direction are configured to face each other, such that the first fitting portion of the first insulator mates with the second fitting portion of the second insulator.

## Description

### [Technical Field]

The present invention relates to an insulator structure of a motor and also relates to a motor-integrated pump.

Patent literature 1 discloses a conventional motor provided with a stator core having a plurality of stacked stator iron plates and a plurality of tooth portions provided on an inner periphery of the stator core and arranged at regular intervals in the circumferential direction.

According to the patent literature 1, insulators are provided at both end portions in an axial direction of the center axis of the stator core, and a plurality of cover portions for covering the outside of the tooth portions are provided at regular intervals in the circumferential direction. Then, a winding is wound around the tooth portion covered with the cover portion. Namely, the cover portions (insulator) assuredly insulate the tooth portion (stator core) from the winding while a magnetic force can be caused to the tooth portions by energizing the winding.

In this case, the head end portion of the cover portion of the first insulator is so made as to be superposed with the head end portion of the cover portion of the second insulator at a certain superposing allowance.
[Patent Literature 1] Japanese Patent Application Laid-Open No. 2001-218407

### [Summary of Invention]

According to the patent literature 1, however, the two insulators having different configurations in a portion where the cover portions are superposed with each other and thereby are produced as different parts, thus causing an increased cost.

In view of the above problem, it is an object of the present invention to provide a motor's insulator structure capable of decreasing production cost by using the same configuration for each of a pair of insulators.

According to a first aspect of the present invention, there is provided an insulator structure of a motor, comprising: a stator core having a plurality of protruding tooth portions which are disposed along an inner periphery of the stator core or an outer periphery of the stator core; a pair of first and second insulators respectively mounted to a first end portion and a second end portion in an axial direction of the stator core, wherein a plurality of cover portions are provided for each of the pair of the first and second insulators so as to cover the plurality of the respective tooth portions; and a winding wound around a tooth portion of the tooth portions covered with the respective cover portions, the winding being capable of causing a magnetic force to the tooth portion by an energizing; wherein with the pair of the first and second insulators, the cover portion's second head end portion in an axial direction of the first insulator in the axial direction and the cover portion's first head end portion in an axial direction of the second insulator in the axial direction mate with each other, the cover portion having the head end portion in the axial direction provided with a first fitting portion and the cover portion having the head end portion in the axial direction provided with a second fitting portion fittable with the first fitting portion are provided for each of the pair of the first and second insulators, the cover portion provided with the first fitting portion and the cover portion provided with the second fitting portion are so disposed as to face each other in such a configuration as to interpose therebetween a center axis of the stator core, and the first insulator and the second insulator which is substantially the same as the first insulator in configuration and is reversed in the axial direction are configured to face each other, such that the first fitting portion of the first insulator mates with the second fitting portion of the second insulator.

According to a second aspect of the present invention, there is provided a motor-integrated pump comprising: the motor including the insulator structure according to the first aspect, and a pump driven by the motor.

### [Brief Description of Drawings]

[Fig. 1] Fig. 1 is a cross sectional view of a motor-integrated pump including a motor provided with an insulator structure, according to a first embodiment of the present invention.
[Fig. 2] Fig. 2 is an exploded perspective view showing a stator core and a pair of insulators, according to the first embodiment of the present invention.
[Fig. 3] Fig. 3 is a perspective view of a subassembly including the insulator and the stator core, according to the first embodiment of the present invention.
[Fig. 4] Fig. 4 is a perspective view of a cross section taken along the line IV-IV in Fig. 3.
[Fig. 5] Fig. 5 is a perspective view of the stator omitting a winding, according to the first embodiment of the present invention.
[Fig. 6] Fig. 6 is a perspective view of a caulked terminal for connecting a control board with the winding of the stator, according to the first embodiment of the present invention.
[Fig. 7] Fig. 7 is a perspective view showing the insulator's cover portion side, according to the first embodiment of the present invention.
[Fig. 8] Fig. 8 is a perspective view showing the insulator's cover portion side, according to a first modified example of the first embodiment of the present invention.
[Fig. 9] Fig. 9 is a perspective view showing the insulator's cover portion side, according to a second modified example of the first embodiment of the present invention.
[Fig. 10] Fig. 10 is a perspective view of an insulator, according to a second embodiment of the present invention.

### [Description of Embodiment]

Hereinafter, embodiments of the present invention are to be set forth in detail referring to the drawings. In addition, the embodiments and modified examples set forth below include the same structural elements. Therefore, common reference numerals or signs are to be given to the same structural elements, and duplicate explanations are to be omitted.

### (First embodiment)

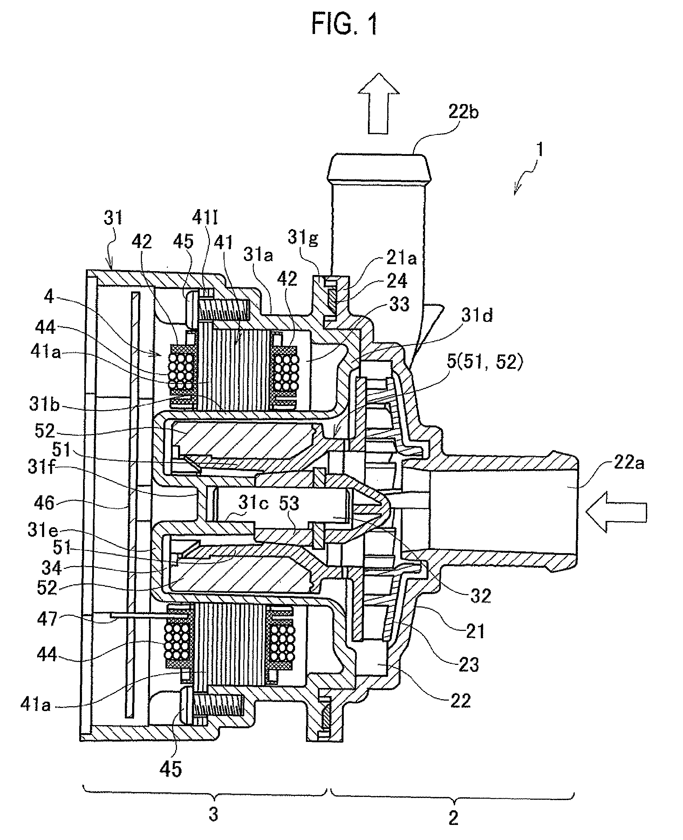

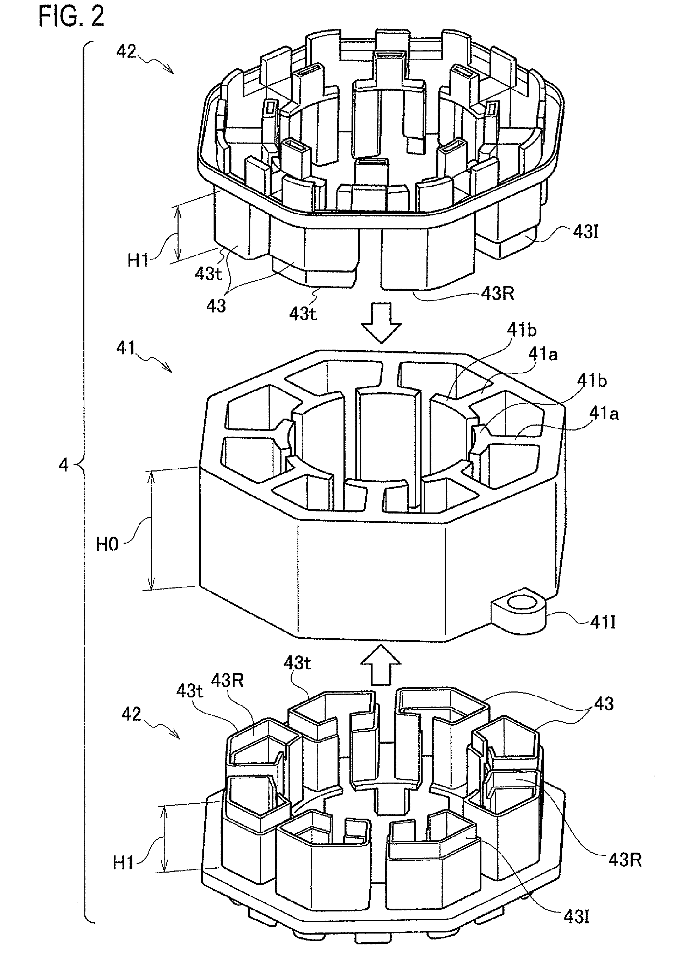

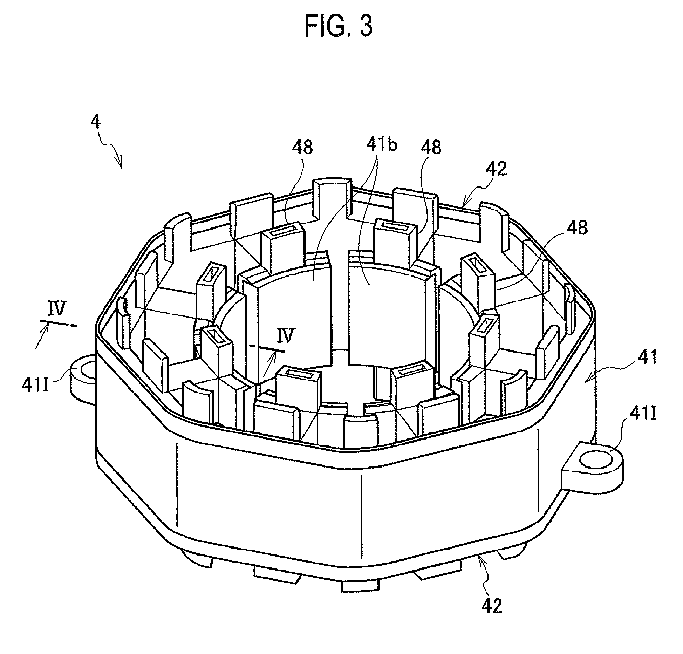

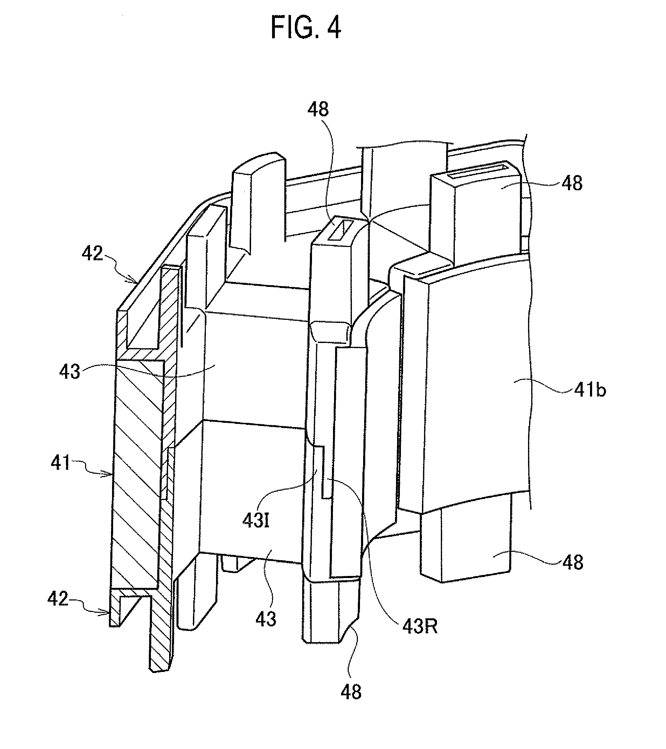

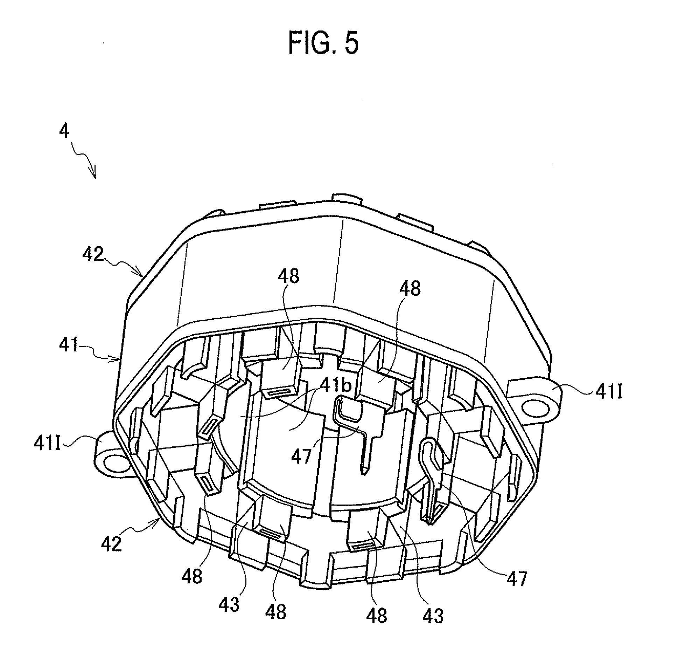

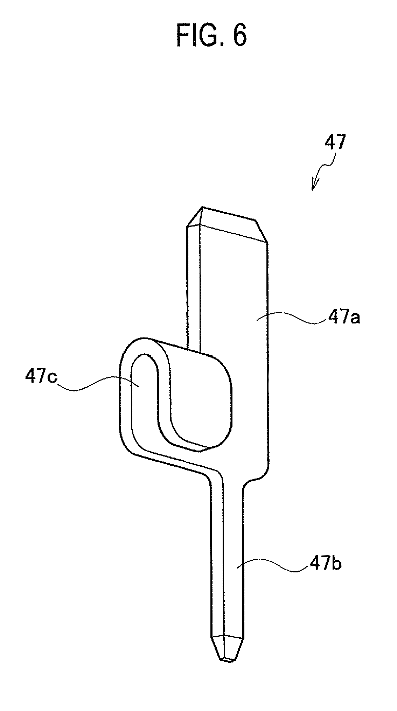

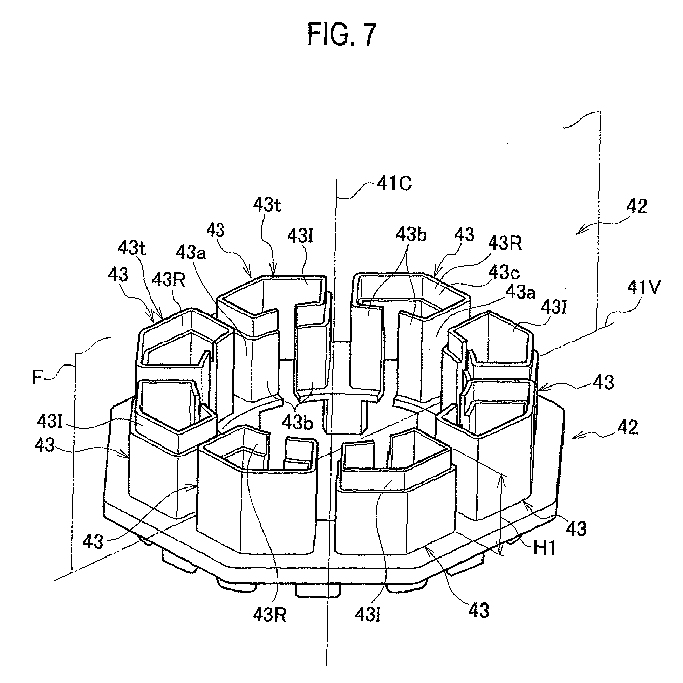

Fig. 1 to Fig. 7 show an insulator structure of a motor, according to a first embodiment of the present invention. Of these drawings, Fig. 1 is a cross sectional view of a motor-integrated pump including a motor provided with the insulator structure according to the first embodiment, Fig. 2 is an exploded perspective view showing a stator core and a pair of the insulators, Fig. 3 is a perspective view of a subassembly including the insulator and the stator core, Fig. 4 is a perspective view of a cross section taken along the line IV-IV in Fig. 3, Fig. 5 is a perspective view of the stator omitting a winding, Fig. 6 is a perspective view of a caulked terminal for connecting a control board with the winding of the stator, and Fig. 7 is a perspective view showing the insulator's cover portion side.

As shown in Fig. 1, a motor-integrated pump 1 is provided with a pump 2 and a motor 3. A pump casing 21 serving as an outer block of the pump 2 and a motor housing 31 serving as an outer block of the motor 3 are integrally assembled to the motor-integrated pump 1.

In a pump chamber 22 of the pump casing 21, an impeller 23 which is a structural element of a centrifugal pump is rotatably received. An intake port 22a is formed in the center portion of the pump chamber 22, and a discharge port 22b is formed in a tangent direction of a peripheral portion of the pump chamber 22. With the above structure, rotating the impeller 23 by means of the motor 3 allows a fluid (absorbed from the intake port 22a) to be discharged from the discharge port 22b.

The motor housing 31 includes a drum-shaped outer wall 31a, an inner wall 31b coaxially disposed inside the outer wall 31a at a certain interval, a cylindrical center wall 31c for fixing a spindle 32 further inside the inner wall 31b. Then, the outer wall 31a' edge portion on the pump 2 side and the inner wall 31b's edge portion on the pump 2 side are connected by means of a substantially torus end wall 31d. On the other hand, the inner wall 31b's edge portion on a side opposite to the pump 2 side and the center wall 31c's edge portion on a side opposite to the pump 2 side are connected by a substantially torus base wall 31e. Moreover, a partition wall 31f is provided inside the center wall 31c.

Then, a flange portion 31g protruding from an outer periphery of the outer wall 31a's edge portion on the pump 2 side and a flange portion 21a protruding from an outer periphery of the pump casing 21 are welded via a packing 24 intervened therebetween, to thereby integrate the pump casing 21 with the motor housing 31.

Moreover, a stator housing 33 is disposed between the outer wall 31a and the inner wall 31b, and a stator 4 of the motor 3 is housed in the stator housing 33. On the other hand, a rotor housing 34 is disposed between the inner wall 31b and the center wall 31c, and a rotor 5 of the motor 3 is housed in the rotor housing 34.

As shown in Fig. 2, the stator 4 includes a stator core 41 having a plurality of protruding tooth portions 41a disposed at regular intervals in an inner circumferential direction, and a pair of insulators 42, 42 each mounted to either end portion of the stator core 41 in an axial direction (upward and downward directions respectively in Fig. 2) where a plurality of cover portions 43 each for insulating an outside of one of the tooth portions 41a are disposed at regular intervals in a circumferential direction of the insulator 42, and a winding 44 which is wound (as shown in Fig. 1) around each of the tooth portions 41a insulated by means of a cover portion 43 and which is capable of causing a magnetic force to each of the tooth portions 41a by energizing.

As shown in Fig. 1, the stator core 41 is formed by stacking a plurality of steel plates each having the tooth portion 41a and punched into a certain configuration. Moreover, as shown in Fig. 2, a protruding fitting portion 411 is disposed outside a first end portion in the axial direction of the stator core 41. As shown in Fig. 1, the fitting portion 41I is tightened by means of a bolt 45 to the outer wall 31a of the motor housing 31, to thereby fix the stator core 41 to the motor housing 31.

As shown in Fig. 2, at a head end portion of the tooth portion 41a, there is formed a circular arc portion 41b extending substantially along an outer face of the inner wall 31b. Each of he tooth portions 41a and each of the circular arc portions 41b represent an external view in a form of a substantially alphabetical T when viewed in the axial direction.

As also shown in Fig. 7, each of the cover portions 43 of the insulator 42 includes a wall face 43a for covering the tooth portion 41a's side face in the circumferential direction (circumferential direction of a center axis 41C) side, a wall face 43b for covering the circular arc portion 41b's outer side face in the radial direction (radial direction of the center axis 41C), and a wall face 43c for covering the stator core 41's inner side face in the radial direction. The cover portion 43 protrudes in a form of a cylinder where the wall faces 43b, 43b are separated.

Moreover, two insulators 42 are used for one motor 3. As shown in Fig. 2, from the cover portion 43 side, the first insulator 42 is so mounted as to mate with a first end portion (lower end portion in Fig. 2) of the stator core 41 in the axial direction. Likewise, from the cover portion 43 side, the second insulator 42 is so mounted as to mate with the second end portion (upper end portion in Fig. 2) of the stator core 41 in the axial direction.

As shown in Fig. 2, a protruding height H1 of the cover portion 43 is formed slightly longer than a half of a height H0 of the stator core 41. As such, in the middle position in the axial direction of the stator core 41, a second head end portion 43t of the cover portion 43 of the first insulator 42 in the axial direction where the second head end portion 43t is disposed on the second side in the axial direction and a first head end portion 43t of the cover portion 43 of the second insulator 42 in the axial direction where the first head end portion 43t is disposed on the first side in the axial direction are superposed with each other. Herein, according to the first embodiment, two insulators 42 having the same configuration are used. Then, the first insulator 42 is reversed relative to the second insulator 42 in the axial direction and the first and second head end portions 43t, 43t of the respective first and second cover portions 43 are rendered to face each other in a proper position, to thereby allow the first and second head end portions 43t, 43t to mate with each other.

Namely, as shown in Fig. 7, according to the first embodiment, the cover portion 43 where a first fitting portion 43I having an inner protruding wall is disposed at the head end portion 43t in the axial direction, and the cover portion 43 where a second fitting portion 43R having an inner dent portion is disposed at the head end portion 43t in the axial direction are mixed in one insulator 42. In this case, the cover portion 43 provided with the first fitting portion 43I and the cover portion 43 provided with the second fitting portion 43R are so disposed as to oppose each other (symmetrical), intervening therebetween a flat face F including the center axis 41C of the stator core 41. Moreover, the first insulator 42 and the second insulator 42 which is reversed in the axial direction and having the same configuration are allowed to face each other in the axial direction in such a position that the head end portions 43t, 43t of the respective cover portions 43, 43 having the first fitting portion 43I or the second fitting portion 43R are close to each other. With this, corresponding to all of the tooth portions 41a, the first fitting portion 43I of the first insulator 42 and the second fitting portion 43R of the second insulator 42 can mate with each other. In other words, with the flat face F as a boundary, the one insulator 42 has a first side area and a second side area. Moreover, there is defined a line 41 V included in the flat face F and crossing the center axis 41C. The cover portion 43, the first fitting portion 43I and the second fitting portion 43R are formed in the second side area such that the first side area can face and mate with the second side area in the axial direction when the first side area is rotated by 180° with the line 41V as an axis.

Moreover, as shown in Fig. 2 and Fig. 7, the insulator 42 has such a structure that the cover portion 43 provided with the first fitting portion 43I and the cover portion 43 provided with the second fitting portion 43R are alternately disposed at a certain pitch along the circumferential direction. According to the first embodiment, eight tooth portions 41a are disposed along the circumferential direction at certain pitches (45°), thereby alternately disposing the cover portion 43 (provided with the first fitting portion 43I) and the cover portion 43 (provided with the second fitting portions 43R) at 45°. Herein, according to the first embodiment, the cover portions 43 are disposed in the circumferential direction at eight portions, however, the number of such portions may be more or less than eight. In this case, however, the number of disposing portions of the cover portions 43 should be a multiple of two.

With the above structure, as shown in Fig. 4, the head end portions 43t, 43t in the axial direction of the cover portions 43, 43 of a pair of the insulators 42, 42 having the same configuration, namely, the first fitting portion 43I and the second fitting portion 43R are superposed in the thickness direction, the tooth portion 41a and circular arc portion 41b's faces on the winding 44 side are covered with the cover portion 43 without a gap, and the winding 44 is wound around the tooth portion 41a covered with the cover portion 43. Namely, according to the first embodiment, the cover portions 43, 43 having the respective head end portions 43t, 43t in the axial direction mated with each other and the two insulators 42, 42 including the cover portions 43, 43 assuredly insulate the winding 44 from the tooth portion 41a (stator 4).

Moreover, as shown in Fig. 1, a control board 46 for energizing the winding 44 with a control current is disposed inside the motor housing 31's edge portion opposite to the pump 2 side. By means of a caulked terminal 47 shown in Fig. 6, the control board 46 is electrically connected with the winding 44 of each of the tooth portions 41a. A tightening member such as screw fixes the control board 46 to the motor housing 31.

Moreover, as shown in Fig. 6, the caulked terminal 47 includes a fitting portion 47a disposed at a first end portion (upper end portion in Fig. 6) and to be mounted to the insulator 42, an insertion terminal 47b disposed on the second end portion (lower end portion in Fig. 6) and to be connected to the control board 46, and a caulk portion 47c disposed at the fitting portion 47a's edge portion on the insertion terminal 47b side and capable of caulking a first end portion of the winding 44.

Then, the insulator 42 close to the control board 46 is to be set forth. As shown in Fig. 4 and Fig. 5, on the above insulator 42's side opposite to the side where the protruding cover portion 43 is disposed, a protruding fitting receiver 48 having a cross section substantially into a rectangle is disposed corresponding to each of the tooth portions 41a, and the fitting portion 47a of the caulked terminal 47 is inserted into the fitting receiver 48 to thereby mount the calked terminal 47. Herein, the above fitting receiver 48 is also formed in the insulator 42 on the further side of the control board 46. However, this fitting receiver 48 is not to be fitted with the caulked terminal 47.

Moreover, as shown in Fig. 1, the rotor 5 is formed with a rotary cylinder 51 integrated with the impeller 23 and extending from the impeller 23 and a plurality of magnets 52 (or a magnet provided with a plurality of poles) mounted at regular intervals in a circumferential direction of the rotary cylinder 51. In the rotor housing 34, the rotor 5 is rotatably supported to the spindle 32 by means of a bearing 53 disposed on the inner periphery of the rotor 5.

As such, according to the first embodiment, the control current energized from the control board 46 to the winding 44 rotates the rotor 5 of the motor 3, and then rotates the impeller 23 integrated with the rotor 5 to thereby drive the pump 2. With this, the intake fluid from the intake port 22a is discharged from the discharge port 22b.

As set forth above, according to the first embodiment, the cover portion 43 provided with the first fitting portion 43I and the cover portion 43 provided with the second fitting portion 43R are so disposed as to oppose each other intervening therebetween the face F which includes the center axis 41C, and the first insulator 42 and the second insulator 42 which has the same configuration as that of the first insulator 42 and is reversed in the axial direction face each other in the axial direction. As such, the first fitting portion 43I of the first insulator 42 and the second fitting portion 43R of the second insulator 42 mate with each other, to thereby allow the two insulators (each disposed at either end portion in the axial direction of the stator core) to be used in common as a single component part. As such, compared with the case that the two insulators each disposed at either end portion in the axial direction and different from each other in configuration, the production cost of the motor 3 and the motor-integrated pump 1 can be decreased.

Moreover, according to the first embodiment, the insulator 42 has such a structure that the cover portion 43 provided with the first fitting portion 43I and the cover portion 43 provided with the second fitting portion 43R are alternately disposed at certain pitches along the circumferential direction. As such, when the first insulator 42 is rotated in a constant rotational direction around the axis 41 relative to the second insulator 42, such two insulators 42, 42 can be disposed in fittable positions within an angle range (less than 90° according to the first embodiment) twice the pitch, thus facilitating alignment and improving assemblability.

### (Modified examples of first embodiment)

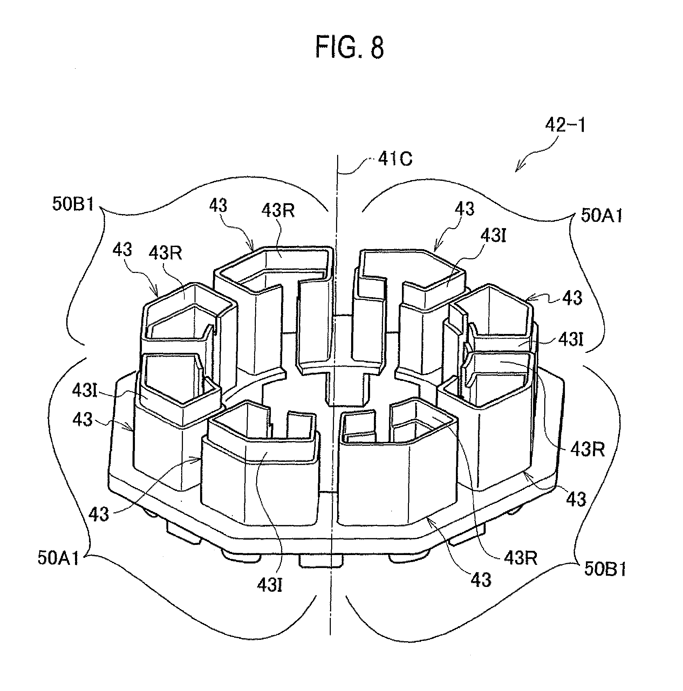

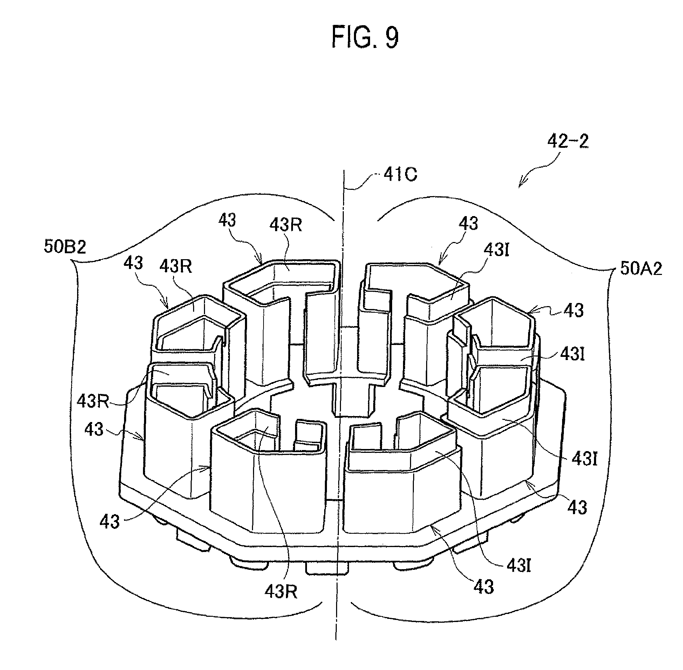

Fig. 8 is a perspective view showing the cover portion 43 side of an insulator 42-1 according to a first modified example of the first embodiment, while Fig. 9 is a perspective view showing the cover portion 43 side of an insulator 42-2 according to a second modified example of the first embodiment.

The insulator 42-1 shown in Fig. 8 and the insulator 42-2 shown in Fig. 9 have such a structure that first cover portion groups 50A1 (including the first fitting portion 43I), 50A2 (including the first fitting portion 43I) including a plurality of cover portions 43 having the first fitting portion 43I and second cover portion groups 50B1 (including the second fitting portion 43R), 50B2 (including the second fitting portion 43R) fittable with the first cover portion groups 50A1, 50A2 are alternately disposed at certain pitches along the circumferential direction of the center axis 41C.

With the insulator 42-1 shown in Fig. 8, the first cover portion group 50A1 has such a structure that the two cover portions 43 each fitted with the first fitting portion 43I are disposed at an angle interval of 45° with respect to the center axis 41C, while the second cover portion group 50B1 has such a structure that the two cover portions 43 each fitted with the second fitting portion 43R are disposed at an angle interval of 45° with respect to the center axis 41C. The first cover portion group 50A1 and the second cover portion group 50B1 are alternately disposed along the circumferential direction at a 90° pitch.

With the insulator 42-1 shown in Fig. 9, the first cover portion group 50A2 has such a structure that the four cover portions 43 each fitted with the first fitting portion 43I are disposed at an angle interval of 45° with respect to the center axis 41C, while the second cover portion group 50B2 has such a structure that the four cover portions 43 each fitted with the second fitting portion 43R are disposed at an angle interval of 45° with respect to the center axis 41C. The first cover portion group 50A2 and the second cover portion group 50B2 are alternately disposed along the circumferential direction at a 180° pitch.

Then, referring to Fig. 8 and Fig. 9, it is obvious that, like the first embodiment (refer to Fig. 7), the first fitting portion 43I and the second fitting portion 43R are so disposed as to face each other intervening therebetween at least one flat face (not shown) which includes the center axis 41C.

As such, according to the first modified example of the first embodiment, allowing the two insulators 42-1, 42-1 (having the same configuration) to face each other can render the first fitting portion 43I of the first insulator 42-1 to mate with the second fitting portion 43R of the second insulator 42-1. Then, in this case, the first cover portion group 50A1 and the second coved portion group 50B1 are alternately disposed along the circumferential direction at a 90° pitch. As such, in the case that the two insulators 42-1, 42-1 mate with each other and are rotated relative to each other, such two insulators 42-1, 42-1 can be disposed at a relative angle (insulators 42-1, 42-1 fittable) at less than two relative rotation pitches (180°) in the constant rotational direction.

Moreover, according to the second modified example of the first embodiment, allowing the two insulators 42-2, 42-2 (having the same configuration) to face each other can render the first fitting portion 43I of the first insulator 42-2 to mate with the second fitting portion 43R of the second insulator 42-2. Then, in this case, the first cover portion group 50A2 and the second cover portion group 50B2 are alternately disposed along the circumferential direction at a 180° pitch. As such, in the case that the two insulators 42-2, 42-2 mate with each other and are rotated relative to each other, such two insulators 42-2, 42-2 can be disposed at a relative angle (insulators 42-2, 42-2 fittable) at less than two relative rotation pitches (360°) in the constant rotational direction.

In addition, according to the first and second modified examples of the first embodiment, the first cover portion groups 50A1, 50A2 and the second cover portion groups 50B1, 50B2 each have such cover portions 43 only as have the same configuration. Otherwise, the first cover portion group and the second cover portion group each may have such a structure that the cover portion 43 including the first fitting portion 43I and the cover portion 43 including the second fitting portion 43R are mixed. Specifically, for example, such a structure is allowed that the first fitting portion 43I, second fitting portion 43R of the cover portion 43 are arranged in the first cover portion group (43I, 43R, 43R, 43I sequentially in the circumferential direction) and the second cover portion group (43R, 43I, 43I, 43R sequentially in the circumferential direction, following the first cover portion group).

### (Second embodiment)

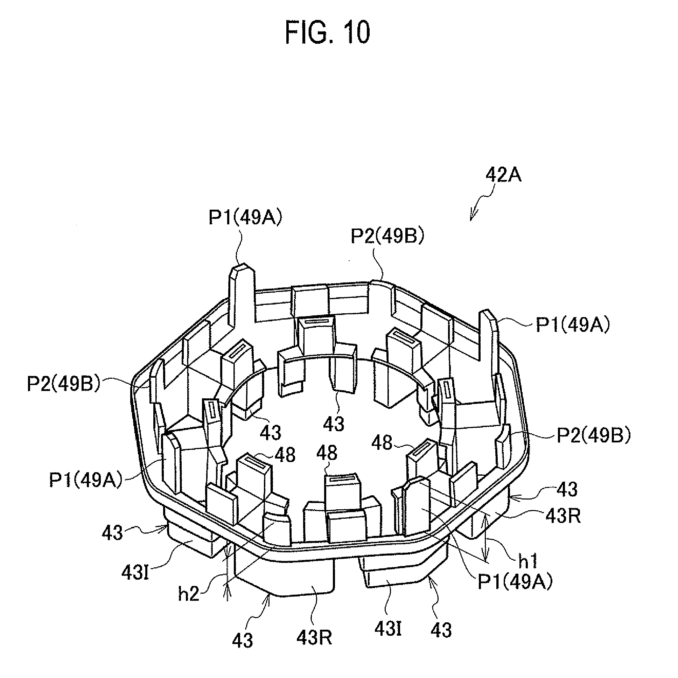

Fig. 10 is a perspective view of an insulator 42A, according to a second embodiment of the present invention.

The second embodiment is different from the first embodiment in that the second embodiment has such a structure that alignment marks 49A, 49B each serving as a guidepost for indicating position of mounting the insulator 42A to the stator core 41 are disposed at the insulator 42A.

Specifically, on the insulator 42A's side opposite to the insulator 42A's side provided with the cover portion 43, the alignment marks 49A, 49B are provided as protruding portions P1, P2 which protrude corresponding to the respective cover portions 43. Then, a height h1 of the protruding portion P1 corresponding to the cover portion 43 provided with the first fitting portion 43I and a height h2 of the protruding portion P2 corresponding to the cover portion 43 provided with the second fitting portion 43R are made different (h1 > h2) from each other, to thereby accomplish a distinction of the alignment mark 49A from the alignment mark 49B.

When the insulator 42A is mounted to an axial end portion of the stator core 41, the cover portion 43 is fitted in the stator core 41, thereby making it impossible to visually recognize the first fitting portion 43I and second fitting portion 43R from outside. However, without the visual recognition of the first fitting portion 43I and second fitting portion 43R, proper dispositions of the first fitting portion 43I and second fitting portion 43R can be recognized by means of the outside protruding portions P1, P2.

As such, according to the second embodiment, the position for mounting the insulator 42A to the stator core 41 can be recognized by means of the protruding portions P1, P2 (49A, 49B), thus improving assemblability of the insulator 42A.

Moreover, according to the second embodiment, the alignment marks 49A, 49B are disposed on the insulator 42A's side opposite to the insulator 42A's side having the cover portion 43 and serve as the protruding portions P1, P2 which protrude corresponding to the respective cover portions 43. Thereby, the protruding portions P1, P2 can be used for handling (or winding operation) the winding 44 or keeping strength of the insulator 42A.

As set forth above, the preferred embodiments of the present invention have been described. However, the present invention is not limited to such embodiments and variation of the embodiments are allowed. For example, although the motor 3 is installed in the motor-integrated pump 1 according to the above embodiments, the present invention can be implemented as a motor other than the motor 3.

Moreover, although the stator core 41 is so configured as to surround the rotor 5 according to the above embodiments, a structure of having the rotor to surround the stator core, namely, a structure that the tooth portion is disposed on the outer periphery of the stator core in such a configuration as to protrude radially outwardly is allowed for implementation.

In addition, the alignment marks 49A, 49B may be any of those which can be visually recognized or touch-recognized. Thereby, figure, symbol, character, color, surface property (surface roughness or variation of optical reflectivity), dent, irregularities and the like are allowed for embodying the alignment marks 49A, 49B.

The entire contents of the Japanese Patent Application No. 2008-015418 (filed on January 25, 2008 in Japan) are incorporated herein by reference.

### [Industrial Applicability]

With the insulator structure of the present invention, the cover portion provided with the first fitting portion and the cover portion provided with the second fitting portion are so disposed as to oppose each other intervening therebetween the face which includes the center axis, and the first insulator and the second insulator which has the same configuration as that of the first insulator and is reversed in the axial direction face each other in the axial direction. As such, the first fitting portion of the first insulator and the second fitting portion of the second insulator mate with each other, to thereby allow the two insulators (each disposed at either end portion in the axial direction of the stator core) to be used in common as a single component part.

## Claims

1. An insulator structure of a motor, comprising:
a stator core having a plurality of protruding tooth portions which are disposed along an inner periphery of the stator core or an outer periphery of the stator core;
a pair of first and second insulators respectively mounted to a first end portion and a second end portion in an axial direction of the stator core, wherein a plurality of cover portions are provided for each of the pair of the first and second insulators so as to cover the plurality of the respective tooth portions; and
a winding wound around a tooth portion of the tooth portions covered with the respective cover portions, the winding being capable of causing a magnetic force to the tooth portion by an energizing;
wherein
with the pair of the first and second insulators, the cover portion's second head end portion in an axial direction of the first insulator in the axial direction and the cover portion's first head end portion in an axial direction of the second insulator in the axial direction mate with each other,
the cover portion having the head end portion in the axial direction provided with a first fitting portion and the cover portion having the head end portion in the axial direction provided with a second fitting portion fittable with the first fitting portion are provided for each of the pair of the first and second insulators,
the cover portion provided with the first fitting portion and the cover portion provided with the second fitting portion are so disposed as to face each other in such a configuration as to interpose therebetween a center axis of the stator core, and
the first insulator and the second insulator which is substantially the same as the first insulator in configuration and is reversed in the axial direction are configured to face each other, such that the first fitting portion of the first insulator mates with the second fitting portion of the second insulator.

2. The insulator structure of the motor as claimed in claim 1, wherein
the cover portion provided with the first fitting portion and the cover portion(43) provided with the second fitting portion are alternately disposed at a certain pitch along a circumferential direction of the center axis.

3. The insulator structure of the motor as claimed in claim 1, wherein
a first cover portion group having the plurality of the cover portions provided with the first fitting portion and a second cover portion group fittable with the first cover portion group are alternately disposed at certain pitches along a circumferential direction of the center axis.

4. The insulator structure of the motor as claimed in claim 1, wherein
the plurality of the cover portions disposed are a multiple of two in number.

5. The insulator structure of the motor as claimed in claim 1, wherein
the plurality of the cover portions disposed are eight in number.

6. The insulator structure of the motor as claimed in claim 3, wherein
the first cover portion group includes two of the cover portions provided with the first fitting portions, wherein the two cover portions are disposed at an angle interval of 45° with respect to the center axis,
the second cover portion group includes two of the cover portions provided with the second fitting portions, wherein the two cover portions are disposed at an angle interval of 45° with respect to the center axis, and
the first cover portion group and the second cover portion group are alternately disposed at a 90° pitch in the circumferential direction.

7. The insulator structure of the motor as claimed in claim 3, wherein
the first cover portion group includes four of the cover portions provided with the first fitting portions, wherein the four cover portions are disposed at an angle interval of 45° with respect to the center axis,
the second cover portion group includes four of the cover portions provided with the second fitting portions, wherein the four cover portions are disposed at an angle interval of 45° with respect to the center axis, and
the first cover portion group and the second cover portion group are alternately disposed at a 180° pitch in the circumferential direction.

8. The insulator structure of the motor as claimed in claim 1, wherein
at least one of the pair of the first and second insulators has an alignment mark serving as a guidepost for indicating a position of mounting the pair of the insulators to the stator core.

9. The insulator structure of the motor as claimed in claim 8, wherein
on the insulator's side opposite to the insulator's side provided with the cover portion, the alignment marks are provided as protruding portions which protrude corresponding to the respective cover portions, and
a height of the protruding portion corresponding to the cover portion provided with the first fitting portion and a height of the protruding portion corresponding to the cover portion provided with the second fitting portion are made different from each other, to thereby accomplish a distinction of the alignment marks.

10. The insulator structure of the motor as claimed in claim 1, wherein
a protruding height of the cover portion is formed slightly longer than a half of a height of the stator core,
in a substantially middle position in the axial direction of the stator core, the second head end portion of the cover portion of the first insulator in the axial direction where the second head end portion is disposed on a second side in the axial direction and the first head end portion of the cover portion of the second insulator in the axial direction where the first head end portion is disposed on a first side in the axial direction are superposed with each other.

11. A motor-integrated pump comprising:
the motor including the insulator structure according to claim 1, and
a pump driven by the motor.
